# EUROPEAN PATENT APPLICATION

(11) **EP 4 568 012 A1**
(43) Date of publication of application: **11.06.2025**
(21) Application number: 23220340.6
(22) Date of filing: 27.12.2023
(51) Int. Cl.: H01Q 1/32, H01Q 21/00, H01Q 25/00

(54) **WAVEGUIDE ANTENNA DEVICE**

(30) Priority: 05.12.2023 KR 20230174662
(71) Applicant: Bitsensing Inc., Seongnam-si, Gyeonggi-do 13105 (KR)
(72) Inventor: PARK, Rae Seung, 22218 Incheon (KR); KO, Chan Bin, 05215 Seoul (KR); KIM, Su Han, 16873 Yongin-si, Gyeonggi-do (KR)
(74) Representative: BCKIP Part mbB

(57) **Abstract**

The waveguide antenna device includes a first circuit board including a first integrated circuit configured to output a first transmission signal and receive a first reflection signal; and a first waveguide disposed on the first circuit board and configured to guide the first transmission signal and the first reflection signal. The first waveguide includes a first separating pipe configured to guide the first transmission signal in a first direction and in a second direction different from the first direction and a first receiving pipe configured to guide the first reflection signal received in the first direction to the first integrated circuit.

## Description

### CROSS-REFERENCE TO RELATED APPLICATION

This application claims the benefit of Korean Patent Application No. 10-2023-0174662 filed on December 5, 2023 in the Korean Intellectual Property Office.

### TECHNICAL FIELD

The present disclosure relates to a waveguide antenna device.

### BACKGROUND

For advancement of advanced driver-assistance systems (ADAS) and implementation of high-level autonomous driving solutions, it has been required to monitor a vehicle in all directions (360°). In particular, with continuous development of the autonomous driving technology, demands for high resolution of an antenna device have been greatly increased.

An antenna device applied to a vehicle may include a plurality of antennas to obtain high resolution, and may be configured to detect a range, a velocity, an azimuth angle and an elevation angle of an object. However, the antenna device can transmit and receive signals only in specific directions in which the plurality of antennas is disposed.

### SUMMARY

In view of the foregoing, the present disclosure is conceived to provide a waveguide antenna device which can transmit and receive signals in different directions at the same time.

Also, the present disclosure is conceived to provide a waveguide antenna device which can be installed in a mobility device such as a vehicle and can effectively eliminate a blind zone.

However, the problems to be solved by the present disclosure are not limited to the above-described problems, and there may be other problems to be solved by the present disclosure.

As a means for achieving the above-described technical problems, an embodiment of the present disclosure provides a waveguide antenna device including, a first circuit board including a first integrated circuit configured to output a first transmission signal and receive a first reflection signal; and a first waveguide disposed on the first circuit board and configured to guide the first transmission signal and the first reflection signal, wherein the first waveguide includes a first separating pipe configured to guide the first transmission signal in a first direction and in a second direction different from the first direction and a first receiving pipe configured to guide the first reflection signal received in the first direction to the first integrated circuit.

The above-described means for solving the problem are merely illustrative and should not be construed as limiting the present disclosure. In addition to the exemplary embodiments described above, there may be additional embodiments described in the drawings and detailed description of the invention.

According to the present disclosure, it is possible to monitor a vehicle in all directions by transmitting radar signals separately forwards and backward.

Also, according to the present disclosure, the antenna can have a double resolution compared to a conventional antenna including the same number of integrated circuits.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG. 1** shows the configuration of an integrated circuit included in a waveguide antenna device according to an embodiment of the present disclosure.
**FIG. 2A** illustrates an antenna element group arranged in a horizontal direction according to an embodiment of the present disclosure.
**FIG. 2B** illustrates an antenna element group arranged in a vertical direction according to an embodiment of the present disclosure.
**FIG. 3A** shows an example of an array in which an antenna element group is physically arranged according to an embodiment of the present disclosure.
**FIG. 3B** shows an example of the array in which an antenna element group is virtually arranged according to an embodiment of the present disclosure.
**FIG. 4** shows the configuration of a waveguide antenna device according to an embodiment of the present disclosure.
**FIG. 5A** is a transparent perspective view of a waveguide according to an embodiment of the present disclosure.
**FIG. 5B** is a plan view of a first layer of the waveguide according to an embodiment of the present disclosure.
**FIG. 5C** is a plan view of a second layer of the waveguide according to an embodiment of the present disclosure.
**FIG. 5D** is a plan view of a cover part of the waveguide according to an embodiment of the present disclosure.
**FIG. 6** is a transparent perspective view of the waveguide antenna device according to a first embodiment of the present disclosure.
**FIG. 7A****,** **FIG. 7B** and **FIG. 7C** are perspective views of the waveguide antenna device arranged in various ways according to a second embodiment of the present disclosure.
**FIG. 8** shows the configuration of the waveguide antenna device according to a third embodiment of the present disclosure.
**FIG. 9A** shows the configuration of the waveguide according to the third embodiment of the present disclosure.
**FIG. 9B** shows a detailed configuration of the waveguide antenna device according to the third embodiment of the present disclosure.
**FIG. 10** is a graph of transmission signals from a waveguide antenna device according to an embodiment of the present disclosure over time.
**FIG. 11** is a flowchart showing a method of controlling a waveguide antenna device according to an embodiment of the present disclosure.
**FIG. 12** illustrates an example where the waveguide antenna device according to an embodiment of the present disclosure is provided.

### DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Through the whole document, when a part "comprises or includes" a certain components, this means that it may further include other components rather than excluding other components unless specifically stated to the contrary.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" or "step of" as used through the whole document does not mean "step for."

Through the whole document, the term "combination(s) thereof" included in the Markushi format expression means a mixture or combination of one or more selected from a group consisting of the components described in the Markushi format expression, and means containing one or more selected from the group consisting of the above components. Through the whole document, references to "A and/or B" mean "A or B, or A and B."

Hereinafter, embodiments of the present disclosure will be described in detail with reference to the accompanying drawings. However, the present disclosure may not be limited to these implementations, examples, and drawings.

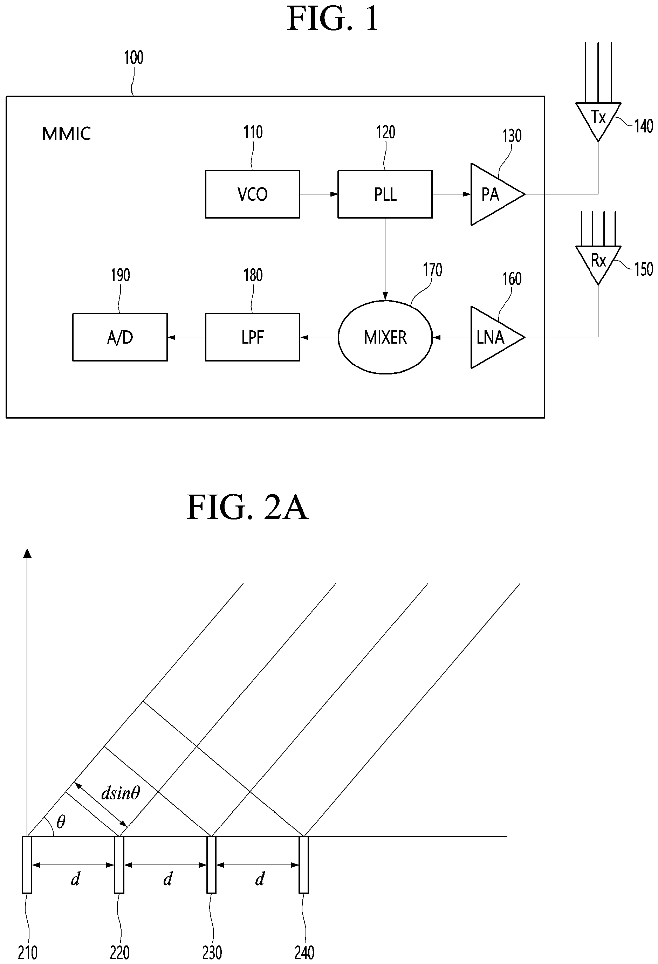

**FIG. 1** shows the configuration of an integrated circuit 100 included in a waveguide antenna device according to an embodiment of the present disclosure.

Referring to **FIG. 1****,** the waveguide antenna device according to an embodiment of the present disclosure may be configured to transition and guide a radar signal output from an integrated circuit 100 and transmit and receive the radar signal to and from a space to be detected. In an embodiment, the integrated circuit 100 may be configured to generate and transmit a radar signal (*e.g*., a transmission signal). In an embodiment, the integrated circuit 100 may be configured to receive a radar signal (*e.g*., a reception signal) from the outside.

In an embodiment, the integrated circuit 100 may be a monolithic microwave integrated circuit (MMIC). In an embodiment, the integrated circuit 100 may include a VCO 110, a PLL 120, a PA 130, a transmit antenna 140, a receive antenna 150, an LNA 160, a MIXER 170, an LPF 180, and/ or an A/D 190.

The VCO (Voltage Controlled Oscillator) 110 is an oscillator configured to generate a variable frequency in linear proportion to an input control voltage, and may generate a sinusoidal wave whose frequency linearly increases depending on a voltage by varying the input control voltage to control an output oscillation frequency.

The PLL (Phase Locked Loop) 120 is a circuit configured to synchronize an input frequency and a phase on average while reducing a phase variation instead of an amplitude, and may correct a phase jitter and perform up-conversion of a frequency.

The PA (Power Amplifier) 130 is configured to generate high output power, and may amplify a radar signal. The transmit antenna 140 may radiate the radar signal amplified by the PA 130 to the outside. In an embodiment, the transmit antenna 140 may include an antenna element group composed of a plurality of antenna elements (*e.g*., 3 Tx) arranged in an array.

The radar signal transmitted by the transmit antenna 140 may be reflected by an object, and the receive antenna 150 may receive the reflected radar signal. In an embodiment, the receive antenna 150 may include an antenna element group composed of a plurality of antenna elements (*e.g*., 4 Rx) arranged in an array.

The LNA (Low Noise Amplifier) 160 is designed to amplify a weak radio frequency (RF) signal and minimize noise, and may perform amplification to minimize noise and maximize a signal.

The MIXER 170 may perform down-conversion of a frequency of the received radar signal by mixing the transmission signal and the reception signal.

The LPF (Low Pass Filter) 180 may allow only a low-frequency band to pass therethrough and may filter a high-frequency band. The A/D (Analog-to-Digital Converter) 190 may convert the analog-type radar signal into a digital-type signal. Accordingly, the integrated circuit 100 may extract a beat frequency including range and velocity information of the received radar signal.

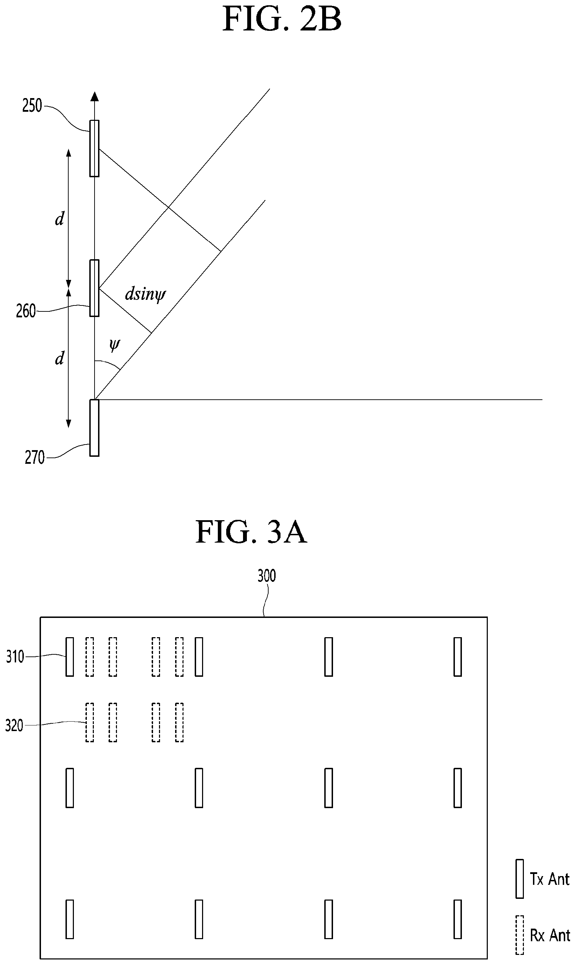

**FIG. 2A** illustrates an antenna element group arranged in a horizontal direction according to an embodiment of the present disclosure. **FIG. 2B** illustrates an antenna element group arranged in a vertical direction according to an embodiment of the present disclosure.

Referring to **FIG. 2A** and **FIG. 2B****,** the waveguide antenna device according to an embodiment may include antenna element groups (*e.g*., transmit antenna element groups 250, 260 and 270 or receive antenna element groups 210, 220, 230 and 240) arranged in an array.

In an embodiment, the waveguide antenna device (*e.g*.: a processor) may perform direction finding by using the correlation between actual array response values incident to a plurality of antennas 210, 220, 230 and 240 and theoretically ideal steering vector values generated depending on a phase difference.

In an embodiment, the antenna element groups composed of the plurality of antenna elements 210, 220, 230 and 240 may be spaced apart from each other in a horizontal direction as shown in **FIG. 2A****.** For example, the plurality of antenna elements 210, 220, 230 and 240 may be spaced apart from each other by a predetermined distance d in the horizontal direction, and, thus, there may be a phase difference dsinθ between radar signals transmitted or received by the plurality of antenna elements 210, 220, 230 and 240. The waveguide antenna device may estimate an azimuth angle of the object based on the phase difference dsinθ between the radar signals.

In an embodiment, the antenna element groups composed of the plurality of antenna elements 250, 260 and 270 may be spaced apart from each other in a vertical direction as shown in **FIG. 2B****.** For example, the plurality of antenna elements 250, 260 and 270 may be spaced apart from each other by a predetermined distance d in the vertical direction, and, thus, there may be a phase difference dsinψ between radar signals transmitted or received by the plurality of antenna elements 250, 260 and 270. The waveguide antenna device may estimate an elevation angle of the object based on the phase difference dsinψ between the radar signals.

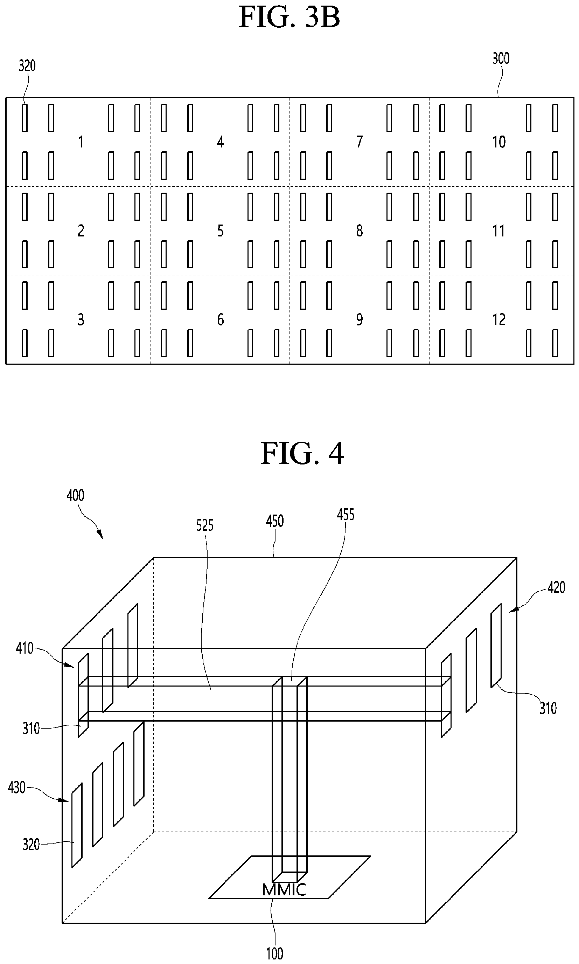

**FIG. 3A** shows an example of an antenna array 300 in which an antenna element group is physically arranged according to an embodiment of the present disclosure. **FIG. 3B** shows an example of the antenna array 300 in which an antenna element group is virtually arranged according to an embodiment of the present disclosure.

Referring to **FIG. 3A****,** the waveguide antenna device according to an embodiment may include twelve (12) transmit antenna elements 310 and eight (8) receive antenna elements 320 disposed in one direction (*e.g*., a first direction or a second direction). For example, the waveguide antenna device may include three (3) transmit antenna elements (3 Tx) 310 disposed in each of both directions (*e.g*., the first direction and the second direction), and four (4) integrated circuits 100 connected to four (4) receive antenna elements (4 Rx) 320 disposed in one direction (*e.g*., any one of the first direction and the second direction).

Referring to **FIG. 3B****,** the waveguide antenna device according to an embodiment corresponding to **FIG. 3A** may have an effect of the antenna array 300 in which 96 antenna elements are virtually arranged by twelve (12) transmit antenna elements 310 and eight (8) receive antenna elements 320 disposed in one direction (*e.g*., the first direction or the second direction).

It may have the effect of doubling the virtual antenna array 300 compared to a conventional waveguide antenna device including four (4) integrated circuits 100 connected to three (3) transmit antenna elements (3 Tx) 310 and four (4) receive antenna elements (4 Rx) 320 disposed in one direction (*e.g*., any one of the first direction and the second direction). If the conventional waveguide antenna device includes four (4) integrated circuits 100, six (6) transmit antenna elements 310 and eight (8) receive antenna elements 320 are disposed in one direction (*e.g*., any one of the first direction and the second direction), and, thus, it may have the effect of an array in which only 48 antenna elements are virtually arranged.

**FIG. 4** shows the configuration of a waveguide antenna device 400 according to an embodiment of the present disclosure.

Referring to **FIG. 4****,** the waveguide antenna device 400 according to an embodiment of the present disclosure may include the integrated circuit 100, a waveguide 450, and antenna element groups 410, 420 and 430 composed of a plurality of antennas 310 and 320.

The integrated circuit 100 may be provided in a circuit board (not shown), and may output a transmission signal or receive a reflection signal through the antenna element groups 410, 420 and 430.

The waveguide 450 may be disposed on the circuit board (not shown) including the integrated circuit 10, and may guide a transmission signal output from the integrated circuit 100 to the antenna element groups 410, 420 and 430 or guide a reflection signal received from the antenna element groups 410, 420 and 430 to the integrated circuit 100.

The waveguide 450 may include a separating pipe 525 configured to guide the transmission signal in the first direction and in the second direction. The separating pipe 525 may include a divider 455 configured to separate the transmission signal output from the integrated circuit 100 in the first direction and in the second direction.

The waveguide 450 may include a receiving pipe (not shown) configured to guide the reflection signal received in the first direction to the integrated circuit 100.

The antenna element groups 410, 420 and 430 may include the transmit antenna element groups 410 and 420 and the receive antenna element group 430 each composed of a plurality of antennas. The transmit antenna element groups 410 and 420 may include the first transmit antenna element group 410 and the second transmit antenna element group 420 disposed in the first direction and in the second direction, respectively. The transmission signal output from the integrated circuit 100 may be guided through the separating pipe 525 of the waveguide 450 to each of the first transmit antenna element group 410 and the second transmit antenna element group 420.

The antenna element groups 410, 420 and 430 may include the receive antenna element group 430 disposed in any one of the first direction and the second direction. The reflection signal received in the first direction or in the second direction may be guided through the receiving pipe (not shown) of the waveguide 450 to the integrated circuit 100.

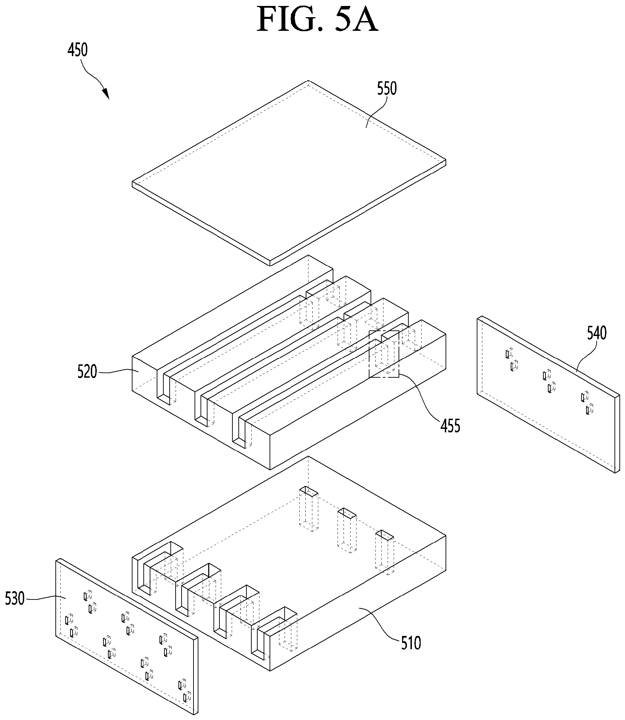

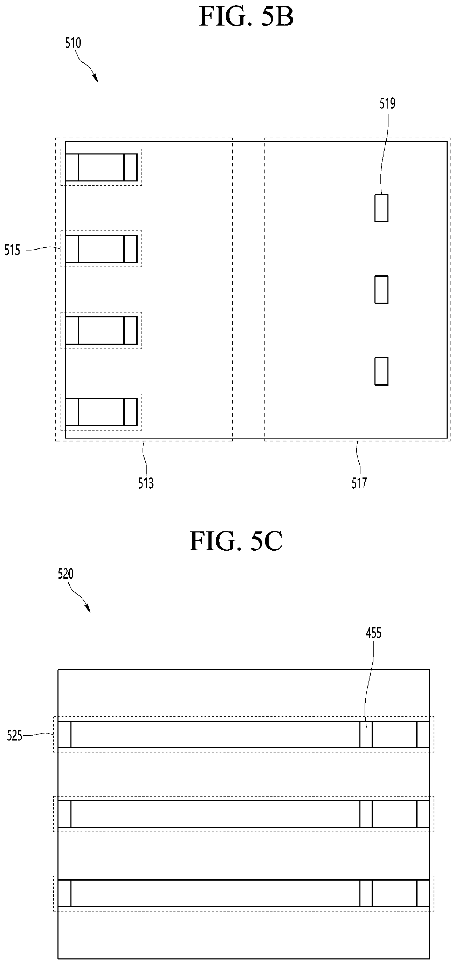

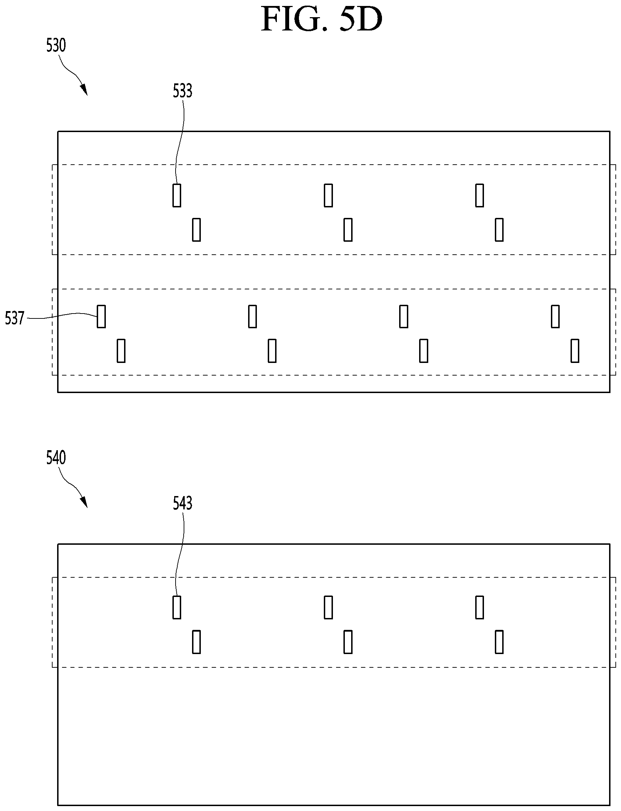

**FIG. 5A** is a transparent perspective view of the waveguide 450 according to an embodiment of the present disclosure. **FIG. 5B** is a plan view of a first layer 510 of the waveguide 450 according to an embodiment of the present disclosure. **FIG. 5C** is a plan view of a second layer 520 of the waveguide 450 according to an embodiment of the present disclosure. **FIG. 5D** is a plan view of cover parts 530, 540 and 550 of the waveguide 450 according to an embodiment of the present disclosure.

Referring to **FIG. 5A to FIG. 5D****,** the waveguide 450 according to an embodiment may include the first layer 510 including a receiving pipe 515 extending from the integrated circuit 100 in the first direction, and the second layer 520 stacked on the first layer 510 in a direction intersecting the first direction and the second direction and including the separating pipe 525 extending from the integrated circuit 100 in the first direction and in the second direction.

The first layer 510 and the second layer 520 may be stacked on a circuit board (not shown) in the vertical direction. The first layer 51 may be disposed on the circuit board (not shown) including the integrated circuit 100, and the second layer 520 may be disposed on the first layer 510.

The first layer 510 may be disposed on the circuit board (not shown), and the first layer 510 may include the receiving pipe 515 extending from the integrated circuit 100 in the first direction. The receive antenna element group 430 may be disposed in the first direction of the first layer 510, and the receiving pipe 515 may be connected to the receive antenna element group 430. For example, the receiving pipe 515 may be provided corresponding in number to the number (*e.g*., four (4)) of the receive antennas 320 forming the receive antenna element group 430.

The first layer 510 may include a connecting pipe 519 extending from the integrated circuit 100 to the separating pipe 525. For example, the connecting pipe 519 may be provided corresponding in number to the number of the separating pipe 525 or the number (*e.g*., three (3)) of the transmit antennas 310 forming each of the first transmit antenna element group 410 and the second transmit antenna element group 420.

The first layer 510 may be divided into a receive antenna part 513 including the receiving pipe 515 in the first direction and a transmit transition part 517 including the connecting pipe 519 in the second direction.

The second layer 520 may be disposed on the first layer 510, and the second layer 520 may include the separating pipe 525 extending from the integrated circuit 100 in the first direction and in the second direction. The first transmit antenna element group 410 may be disposed in the first direction of the second layer 520 and the second transmit antenna element group 420 may be disposed in the second direction of the second layer 520, and the separating pipe 525 may be connected to each of the first transmit antenna element group 410 and the second transmit antenna element group 420. For example, the separating pipe 525 may extend in each of the first direction and the second direction, and may be provided corresponding in number to the number (*e.g*., three (3)) of the transmit antennas 310 forming each of the first transmit antenna element group 410 and the second transmit antenna element group 420.

The waveguide 450 according to an embodiment may include a first cover 530 configured to cover at least a part of the waveguide 450 in the first direction, a second cover 540 configured to cover at least a part of the waveguide 450 in the second direction, and a third cover 550 configured to cover an upper portion of the waveguide 450.

The first cover 530 may extend in a planar direction intersecting the first direction to cover the waveguide 450 in the first direction. The first cover 530 may include a plurality of first transmit slots 533 configured to transmit transmission signals and a plurality of receive slots 537 configured to receive reception signals. The plurality of first transmit slots 533 may correspond to the first transmit antenna element group 410, and the plurality of receive slots 537 may correspond to the receive antenna element group 430.

The second cover 540 may extend in a planar direction intersecting the second direction to cover the waveguide 450 in the second direction. The second cover 540 may include a plurality of second transmit slots 543 configured to transmit transmission signals. The plurality of second transmit slots 543 may correspond to the second transmit antenna element group 420.

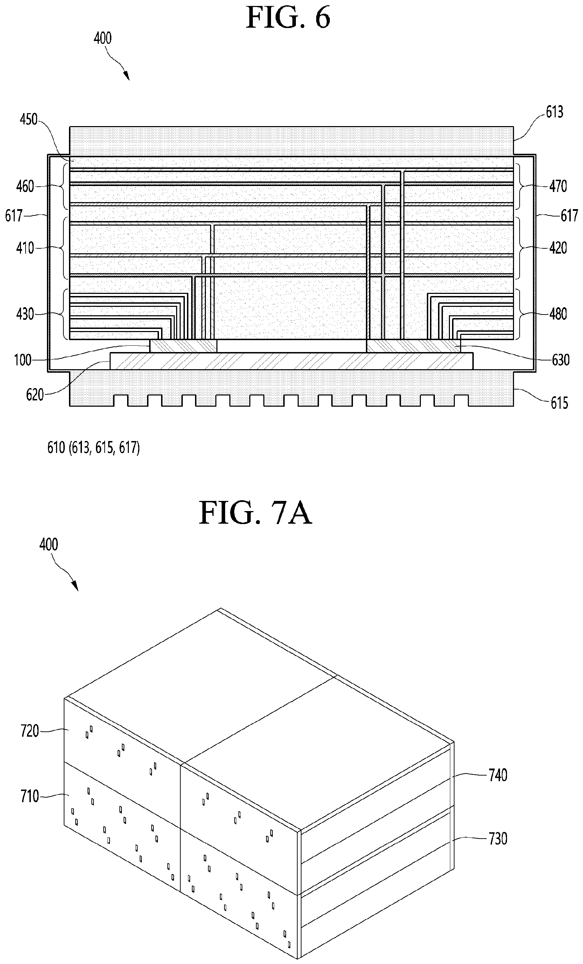

**FIG. 6** is a transparent perspective view of the waveguide antenna device 400 according to a first embodiment of the present disclosure.

Referring to **FIG. 6****,** the waveguide antenna device 400 may be enclosed by a housing part 610 including an upper housing 613, a lower housing 615, and a radome 617 covering a plurality of antenna element groups 410, 420, 430, 460, 470 and 480. Specifically, the waveguide antenna device 400 may include the radome 617 that covers the first transmit antenna element group 410, the third transmit antenna element group 460 and the first receive antenna element group 430 in the first direction and covers the second transmit antenna element group 420, the fourth transmit antenna element group 470 and the second receive antenna element group 480 in the second direction.

The waveguide antenna device 400 may include a circuit board 620 including the first integrated circuit 100 and a second integrated circuit 630 the second integrated circuit 630, the waveguide 450, and the antenna element groups 410, 420, 430, 460, 470 and 480 composed of a plurality of antennas.

The circuit board 620 may include the first integrated circuit 100 configured to output a first transmission signal and receive a first reflection signal and the second integrated circuit 630 configured to output a second transmission signal and receive a second reflection signal. The circuit board 620 may include a processor (not shown) connected to the first integrated circuit 100 and the second integrated circuit 630.

The first integrated circuit 100 may be connected, through the waveguide 450, to the first transmit antenna element group 410 disposed in the first direction, the second transmit antenna element group 420 disposed in the second direction, and the first receive antenna element group 430 disposed in the first direction.

The second integrated circuit 630 may be connected, through the waveguide 450, to the third transmit antenna element group 460 disposed in the first direction, the fourth transmit antenna element group 470 disposed in the second direction, and the second receive antenna element group 480 disposed in the second direction.

Accordingly, each of the first transmit antenna element group 410 disposed in the first direction and the second transmit antenna element group 420 disposed in the second direction may be connected to the first integrated circuit 100, and each of the third transmit antenna element group 460 disposed in the first direction and the fourth transmit antenna element group 470 disposed in the second direction may be connected to the second integrated circuit 630. Thus, the waveguide antenna device 400 may sequentially transmit the first transmission signal and the second transmission signal in the first direction and in the second direction.

The first receive antenna element group 430 disposed in the first direction may be connected to the first integrated circuit 100 to receive the first reflection signal corresponding to the first transmission signal and the second transmission signal. Also, the second receive antenna element group 480 disposed in the second direction may be connected to the second integrated circuit 630 to receive the second reflection signal corresponding to the first transmission signal and the second transmission signal.

The processor (not shown) may be, for example, a micro controller unit (MCU), and may be connected to the first integrated circuit 100 and the second integrated circuit 630 and may control the first integrated circuit 100 and the second integrated circuit 630 to output transmission signals or process received reflection signals. The processor (not shown) may generate and process information about an object around a vehicle based on the reflection signals processed by the first integrated circuit 100 and the second integrated circuit 630.

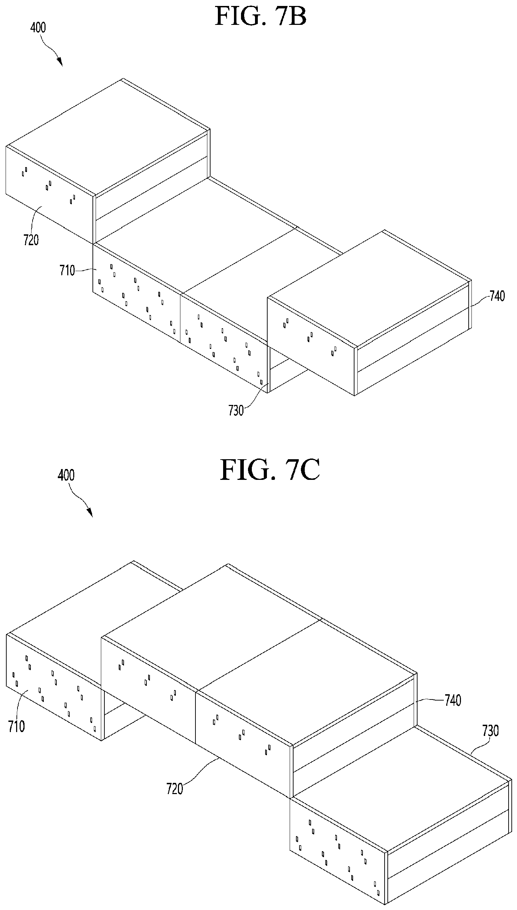

**FIG. 7A****,** **FIG. 7B** and **FIG. 7C** are perspective views of the waveguide antenna device 400 arranged in various ways according to a second embodiment of the present disclosure.

Referring to **FIG. 7A****,** **FIG. 7B** and **FIG. 7C****,** the waveguide antenna device 400 according to an embodiment may include first antenna modules 710 and 730 including a first circuit board and a first waveguide, and second antenna modules 720 and 740 including a second circuit board and a second waveguide.

The first antenna modules 710 and 730 may transmit the first transmission signal in the first direction and in the second direction, and may receive the first reflection signal in the first direction. The second antenna modules 720 and 740 may transmit the second transmission signal in the first direction and in the second direction, and may receive the second reflection signal in the second direction.

The first antenna modules 710 and 730 may include a first circuit board including a first integrated circuit configured to output the first transmission signal and receive the first reflection signal, and a first waveguide including a first separating pipe configured to guide the first transmission signal in the first direction and in the second direction and a first receiving pipe configured to guide the first reflection signal received in the first direction to the first integrated circuit.

The second antenna modules 720 and 740 may include a second circuit board including a second integrated circuit configured to output the second transmission signal and receive the second reflection signal, and a second waveguide including a second separating pipe configured to guide the second transmission signal in the first direction and in the second direction and a second receiving pipe configured to guide the second reflection signal received in the second direction to the second integrated circuit.

The first antenna modules 710 and 730 and the second antenna modules 720 and 740 may be disposed in a direction intersecting the first direction and the second direction. The second waveguide may be disposed in the direction intersecting the first direction and the second direction with respect to the first waveguide. For example, as shown in **FIG. 7A****,** the first antenna modules 710 and 730 and the second antenna modules 720 and 740 may be disposed in the vertical direction. For example, as shown in **FIG. 7B** and **FIG. 7C****,** the first antenna modules 710 and 730 and the second antenna modules 720 and 740 may be disposed in a lateral direction or in a diagonal direction according to the vertical direction and the lateral direction.

The waveguide antenna device 400 according to an embodiment may include a plurality of first antenna modules 710 and 730 and a plurality of second antenna modules 720 and 740. The number of the first antenna modules 710 and 730 may be equal to the number of the second antenna modules 720 and 740. For example, a waveguide antenna device 700 may include a pair of the first antenna modules 710 and 730 and a pair of the second antenna modules 720 and 740 as shown in the drawings.

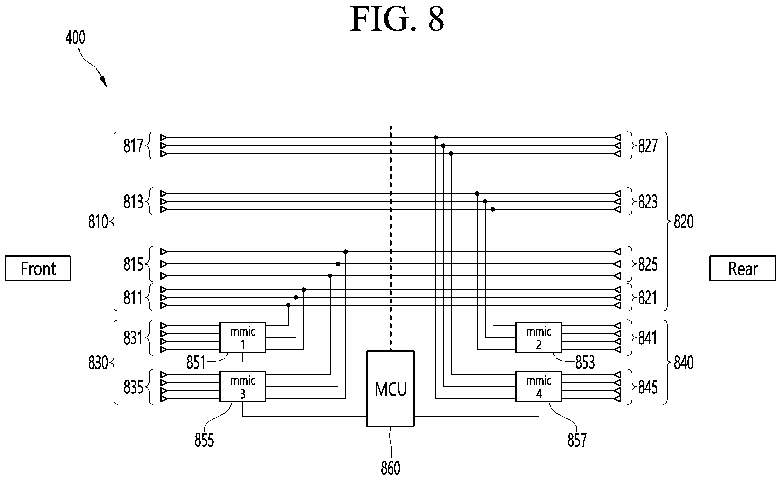

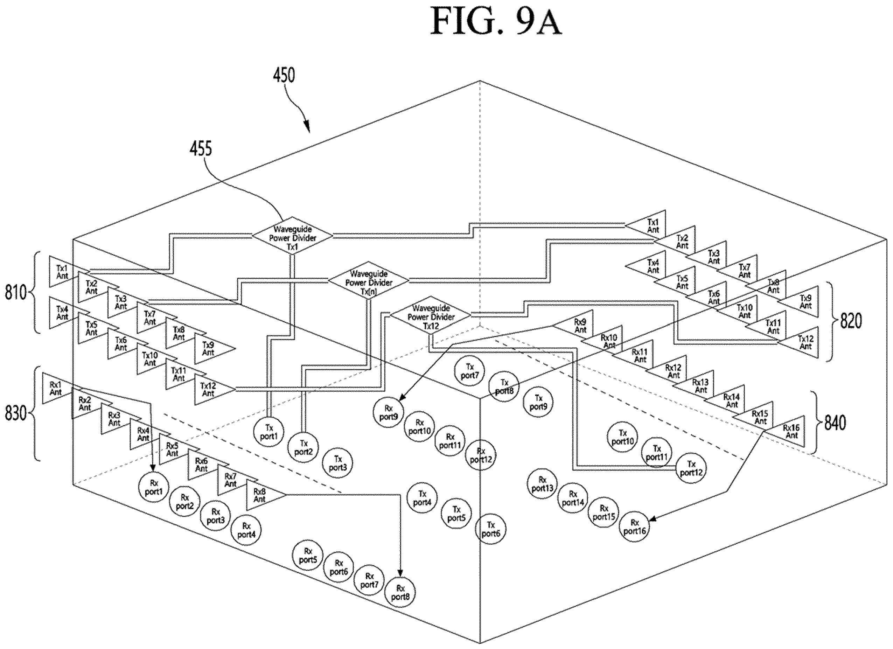

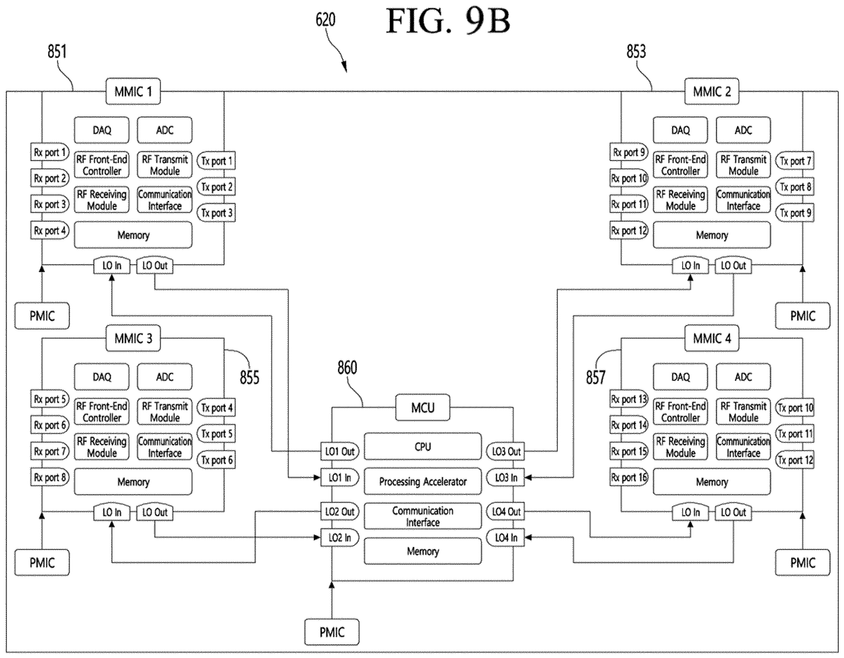

**FIG. 8** shows the configuration of the waveguide antenna device 400 according to a third embodiment of the present disclosure. **FIG. 9A** shows the configuration of the waveguide 450 according to the third embodiment of the present disclosure. **FIG. 9B** shows a detailed configuration of the waveguide antenna device 400 according to the third embodiment of the present disclosure.

Referring to **FIG. 8****,** **FIG. 9A** and **FIG. 9B****,** the waveguide antenna device 400 according to an embodiment may include a circuit board including a first integrated circuit 851, a second integrated circuit 853, a third integrated circuit 855, and a fourth integrated circuit 857.

The first integrated circuit 851, the second integrated circuit 853, the third integrated circuit 855, and the fourth integrated circuit 857 may transmit transmission signals in both the first direction and the second direction. The first integrated circuit 851 and the third integrated circuit 855 may receive reflection signals in the first direction. The second integrated circuit 853 and the fourth integrated circuit 857 may receive reflection signals in the second direction.

The first integrated circuit 851 may be connected to each of a first transmit antenna element group 811 composed of a plurality of antennas disposed in the first direction, a second transmit antenna element group 821 disposed in the second direction, and a first receive antenna element group 831 disposed in the first direction. The third integrated circuit 855 may be connected to each of a fifth transmit antenna element group 815 composed of a plurality of antennas disposed in the first direction, a sixth transmit antenna element group 825 disposed in the second direction, and a third receive antenna element group 835 disposed in the first direction.

The second integrated circuit 853 may be connected to each of a third transmit antenna element group 813 composed of a plurality of antennas disposed in the first direction, a fourth transmit antenna element group 823 disposed in the second direction, and a second receive antenna element group 841 disposed in the second direction. The fourth integrated circuit 857 may be connected to each of a seventh transmit antenna element group 817 composed of a plurality of antennas disposed in the first direction, an eighth transmit antenna element group 827 disposed in the second direction, and a fourth receive antenna element group 845 disposed in the first direction.

Each of the first integrated circuit 851, the second integrated circuit 853, the third integrated circuit 855, and the fourth integrated circuit 857 may include a plurality of transmit ports Tx port 1 to 12 and a plurality of receive ports Rx port 1 to 16. Also, the plurality of transmit ports Tx port 1 to 12 and the plurality of receive ports Rx port 1 to 16 may be connected to each of transmit antenna element groups 810 and 820 and receive antenna element groups 830 and 840.

The waveguide 450 may include a plurality of separating pipes each configured to guide the plurality of transmit ports Tx port 1 to 12 and the plurality of receive ports Rx port 1 to 16 to the transmit antenna element 810 and 820 and the receive antenna element groups 830 and 840, a plurality of receiving pipes, and a plurality of connecting pipes. The waveguide 450 may separate the plurality of transmit ports Tx port 1 to 12 in the first direction and in the second direction through a plurality of dividers 455 and guide them to the transmit antenna element 810 and 820 disposed in the first direction and in the second direction, respectively. The waveguide 450 may be an integrated single component, or may be divided into a plurality of components.

The circuit board 620 may further include a processor 860 connected to each of the first integrated circuit 851, the second integrated circuit 853, the third integrated circuit 855, and the fourth integrated circuit 857. The processor 860 may control the first integrated circuit 851, the second integrated circuit 853, the third integrated circuit 855, and the fourth integrated circuit 857 to output transmission signals and receive reflection signals. Accordingly, it is possible to detect an object.

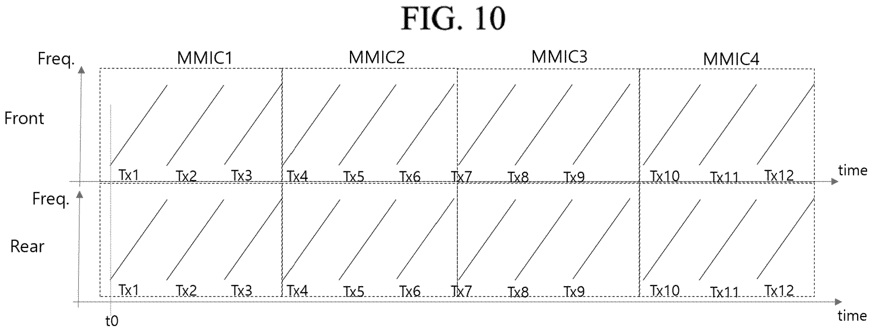

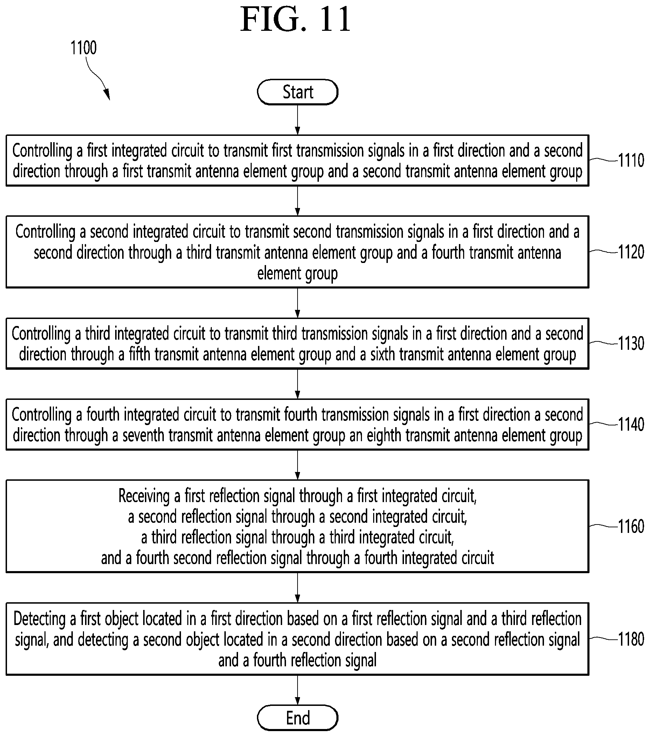

**FIG. 10** is a graph of transmission signals Tx 1 to 12 from a waveguide antenna device according to an embodiment of the present disclosure over time. **FIG. 11** is a flowchart 1100 showing a method of controlling a waveguide antenna device according to an embodiment of the present disclosure.

Referring to **FIG. 10** and **FIG. 11****,** the waveguide antenna device 400 (e.g., the processor 860) according to an embodiment may sequentially transmit transmission signals through a first integrated circuit MMIC 1, a second integrated circuit MMIC 2, a third integrated circuit MMIC 3, and a fourth integrated circuit MMIC 4. The first integrated circuit MMIC 1, the second integrated circuit MMIC 2, the third integrated circuit MMIC 3, and the fourth integrated circuit MMIC 4 may include the plurality of transmit ports Tx port 1 to 12, and the transmit ports Tx port 1 to 12 may sequentially transmit transmission signals.

In an operation 1110, the waveguide antenna device 400 according to an embodiment may control the first integrated circuit MMIC 1 to transmit first transmission signals in the first direction and in the second direction at the same time through the first transmit antenna element group 811 and the second transmit antenna element group 821.

In an operation 1120, the waveguide antenna device 400 according to an embodiment may control the second integrated circuit MMIC 2 to transmit second transmission signals in the first direction and in the second direction at the same time through the third transmit antenna element group 813 and the fourth transmit antenna element group 815.

In an operation 1130, the waveguide antenna device 400 according to an embodiment may control the third integrated circuit MMIC 3 to transmit third transmission signals in the first direction and in the second direction at the same time through the fifth transmit antenna element group 815 and the sixth transmit antenna element group 825.

In an operation 1140, the waveguide antenna device 400 according to an embodiment may control the fourth integrated circuit MMIC 4 to transmit fourth transmission signals in the first direction and in the second direction at the same time through the seventh transmit antenna element group 817 and the eighth transmit antenna element group 827.

For example, the waveguide antenna device 400 may sequentially transmit transmission signals through the first integrated circuit MMIC 1, the second integrated circuit MMIC 2, the third integrated circuit MMIC 3, and the fourth integrated circuit MMIC 4 as described below.

MMIC1 Tx1 Chirp 0 -> MMIC1 Tx2 Chirp 0 -> ... -> MMIC4 Tx12 Chirp 0 → MMIC1 Tx1 Chirp 1 → ... -> MMIC4 Tx12 Chirp 1 → ... -> MMIC4 Tx12 Chirp N

In an operation 1160, the waveguide antenna device 400 according to an embodiment may receive a first reflection signal through the first integrated circuit MMIC 1, a second reflection signal through the second integrated circuit MMIC 2, a third reflection signal through the third integrated circuit MMIC 3, and a fourth reflection signal through the fourth integrated circuit MMIC 4.

Herein, the first reflection signal may be a signal reflected by the object and corresponding to each of a first transmission signal, a second transmission signal, a third transmission signal and a fourth transmission signal transmitted in the first direction. The second reflection signal may be a signal reflected by the object and corresponding to each of a first transmission signal, a second transmission signal, a third transmission signal and a fourth transmission signal transmitted in the second direction. The third reflection signal may be a signal reflected by the object and corresponding to each of a first transmission signal, a second transmission signal, a third transmission signal and a fourth transmission signal transmitted in the first direction. The fourth reflection signal may be a signal reflected by the object and corresponding to each of the first transmission signal, the second transmission signal, the third transmission signal and the fourth transmission signal.

In an operation 1180, the waveguide antenna device 400 according to an embodiment may detect a first object located in the first direction based on the first reflection signal and the third reflection signal, and may detect a second object located in the second direction based on the second reflection signal and the fourth reflection signal.

For example, the processor 860 may sample the reflection signals from the first integrated circuit MMIC 1, the second integrated circuit MMIC 2, the third integrated circuit MMIC 3, and the fourth integrated circuit MMIC 4 and acquire digital signals converted into a digital form. The processor 860 may detect objects located in the first direction and in the second direction by processing data about the first direction and the second direction, respectively, based on the acquired digital signals.

Specifically, the processor 860 may detect and track an object by performing Pre-Processing, Detection, and Tracking.

The Pre-Processing may be a signal processing operation to detect target data from reflection signals Raw Data received in the first direction and in the second direction, respectively. For example, the Pre-Processing may include 2D FFT, NCI(Non-coherent Integration), CFAR Algorithm, etc.

The Pre-Processing may be performed by two methods. First, results of operations by the integrated circuit MMIC may be transmitted to the processor 860 through a communication interface. Alternatively, reflection signals Raw Data acquired by the integrated circuit MMIC may be transmitted to the processor 860 through the communication interface and pre-processed by the processor 860.

The Detection may be an operation to extract information about the object from the target data detected in the first direction and in the second direction. Also, filtering of a ghost target may be performed in the Detection. For example, the Detection may include Range Estimation, Velocity Estimation, Angle Estimation (DOA), Ghost Filter, etc.

The information about the object may include a range, a velocity, an azimuth angle, an elevation angle, a signal power, etc.

In the Tracking, candidate object groups may be created by tracking radar targets detected in the first direction and in the second direction. Algorithms, such as KF or EKF commonly used for tracking, may be used.

The processor 860 may identify a final object from among the detected and tracked objects. The object may be identified by various methods. Herein, the object may be identified by a general method (*e.g*., an object maintained for a predetermined period of time, an object with a higher priority (such as a target directly in front of the vehicle)).

The finally identified object may be converted into a required data format and transmitted to another system (*e.g*., a vehicle DCU) that requests data about the object.

The waveguide antenna device 400 according to an embodiment may receive the first reflection signal through the first integrated circuit MMIC 1 and the second reflection signal through the second integrated circuit MMIC 2. The first reflection signal may be a signal reflected by the object and corresponding to the first transmission signal and the second transmission signal transmitted in the first direction. The second reflection signal may be a signal reflected by the object and corresponding to the first transmission signal and the second transmission signal transmitted in the second direction.

The waveguide antenna device 400 according to an embodiment may detect the object located in the first direction or in the second direction based on the first reflection signal and the second reflection signal.

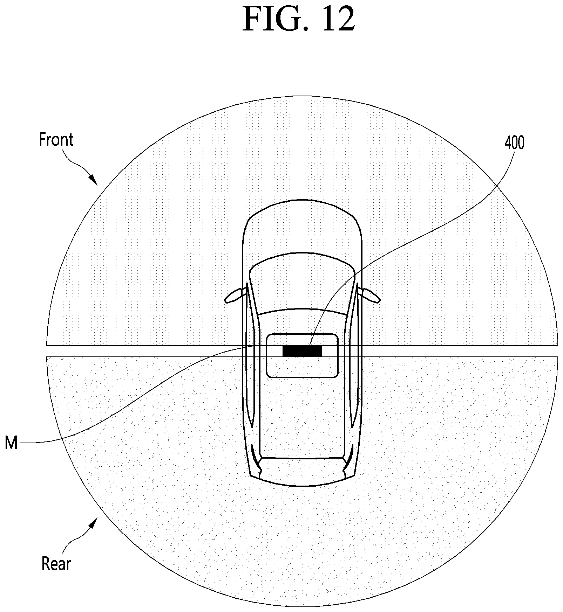

**FIG. 12** illustrates an example where the waveguide antenna device 400 according to an embodiment of the present disclosure is provided.

Referring to **FIG. 12****,** the waveguide antenna device 400 according to an embodiment may be installed in a mobility device M. For example, the waveguide antenna device 400 may be provided on a roof of the mobility device M.

The waveguide antenna device 400 may include a plurality of integrated circuits MMIC each configured to radiate a transmission signal in the first direction and in the second direction at the same time and receive a reflection signal in the first direction or in the second direction. Herein, the first direction may correspond to a direction of travel Front of the mobility device, and the second direction may correspond to an opposite direction Rear to the direction of travel of the mobility device.

Accordingly, the mobility device M in which the waveguide antenna device 400 according to an embodiment of the present disclosure is installed can detect objects located in all directions including the direction of travel Front and the opposite direction Rear to the direction of travel.

The method of controlling the waveguide antenna device 400 described above can be implemented as a computer program stored in a computer-readable storage medium to be executed by a computer or a storage medium including instructions executable by a computer. Also, the method of controlling the waveguide antenna device 400 described above can be implemented as a computer program stored in a computer-readable storage medium to be executed by a computer.

A computer-readable storage medium can be any usable medium which can be accessed by the computer and includes all volatile/non-volatile and removable/non-removable media. Further, the computer-readable storage medium may include all computer storage media. The computer storage media include all volatile/non-volatile and removable/non-removable media embodied by a certain method or technology for storing information such as computer-readable instruction code, a data structure, a program module or other data.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The term "processor circuitry" or "processor" as used herein thus refers to, is part of, or includes circuitry capable of sequentially and automatically carrying out a sequence of arithmetic or logical operations, or recording, storing, and/or transferring digital data. The term "processor circuitry" or "processor" may refer to one or more application processors, one or more baseband processors, a physical central processing unit (CPU), a single- or multi-core processor, and/or any other device capable of executing or otherwise operating computer-executable instructions, such as program code, software modules, and/or functional processes.

A "controller" can refer to a hardware processing circuit, which can include any or some combination of a microprocessor, a core of a multi-core microprocessor, a microcontroller, a programmable integrated circuit, a programmable gate array, a digital signal processor, or another hardware processing circuit. Alternatively, a "controller" can refer to a combination of a hardware processing circuit and machine-readable instructions (software and/or firmware) executable on the hardware processing circuit.

The term "processing circuit" or "controller means" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example a processing circuit may include two processing circuits, an FPGA and a CPU, interconnected on a PCB.

According to an embodiment of the present disclosure, a waveguide antenna device comprising, a first circuit board including a first integrated circuit configured to output a first transmission signal and receive a first reflection signal, and a first waveguide disposed on the first circuit board and configured to guide the first transmission signal and the first reflection signal. Wherein the first waveguide includes a first separating pipe configured to guide the first transmission signal in a first direction and in a second direction different from the first direction and a first receiving pipe configured to guide the first reflection signal received in the first direction to the first integrated circuit.

According to an embodiment of the present disclosure, wherein the first separating pipe includes a divider configured to separate the first transmission signal output from the first integrated circuit in the first direction and in the second direction.

According to an embodiment of the present disclosure, wherein the first waveguide includes, a first layer including the first receiving pipe extending from the first integrated circuit in the first direction, and a second layer stacked on the first layer in a direction intersecting the first direction and the second direction and including the first separating pipe extending from the first integrated circuit in the first direction and in the second direction.

According to an embodiment of the present disclosure, wherein the first layer is disposed between the first circuit board and the second layer, and the first layer includes a connecting pipe extending from the first circuit board to the first separating pipe.

According to an embodiment of the present disclosure, the waveguide antenna device further comprising, a cover part including a first cover configured to cover at least a part of the first waveguide in the first direction and a second cover configured to cover at least a part of the first waveguide in the second direction.

According to an embodiment of the present disclosure, wherein the first cover includes a plurality of first transmit slots configured to transmit the first transmission signal and a plurality of receive slots configured to receive a first reception signal, and the second cover includes a plurality of second transmit slots configured to transmit the first transmission signal.

According to an embodiment of the present disclosure, wherein the first circuit board is further include a second integrated circuit configured to output a second transmission signal and receive a second reflection signal, and the first waveguide includes a second separating pipe configured to guide the second transmission signal in the first direction and in the second direction and a second receiving pipe configured to guide the second reflection signal received in the second direction to the second integrated circuit.

According to an embodiment of the present disclosure, a second circuit board including a second integrated circuit configured to output a second transmission signal and receive a second reflection signal; and a second waveguide including a second separating pipe configured to guide the second transmission signal in the first direction and in the second direction and a second receiving pipe configured to guide the second reflection signal received in the second direction to the second integrated circuit.

According to an embodiment of the present disclosure, wherein the second waveguide is disposed in a direction intersecting the first direction and the second direction with respect to the first waveguide.

According to an embodiment of the present disclosure, wherein the waveguide antenna device is installed in a mobility device, the first direction corresponds to a direction of travel of the mobility device, and the second direction corresponds to an opposite direction to the direction of travel of the mobility device.

According to an embodiment of the present disclosure, the waveguide antenna device further comprising a processor connected to the first integrated circuit and the second integrated circuit, wherein the processor is configured to, control the first integrated circuit to transmit the first transmission signal in the first direction and in the second direction, control the second integrated circuit to transmit the second transmission signal in the first direction and in the second direction, and receive the first reflection signal through the first integrated circuit and the second reflection signal through the second integrated circuit.

According to an embodiment of the present disclosure, wherein the first reflection signal corresponds to the first transmission signal and the second transmission signal transmitted in the first direction, and the second reflection signal corresponds to the first transmission signal and the second transmission signal transmitted in the second direction, and the processor is configured to detect an object located in the first direction or in the second direction based on the first reflection signal and the second reflection signal.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

## Claims

1. A waveguide antenna device, comprising:
a first circuit board including a first integrated circuit configured to output a first transmission signal and receive a first reflection signal; and
a first waveguide disposed on the first circuit board and configured to guide the first transmission signal and the first reflection signal,
wherein the first waveguide includes a first separating pipe configured to guide the first transmission signal in a first direction and in a second direction different from the first direction and a first receiving pipe configured to guide the first reflection signal received in the first direction to the first integrated circuit.

2. The waveguide antenna device of Claim 1,
wherein the first separating pipe includes a divider configured to separate the first transmission signal output from the first integrated circuit in the first direction and in the second direction.

3. The waveguide antenna device of Claim 1,
wherein the first waveguide includes:
a first layer including the first receiving pipe extending from the first integrated circuit in the first direction; and
a second layer stacked on the first layer in a direction intersecting the first direction and the second direction and including the first separating pipe extending from the first integrated circuit in the first direction and in the second direction.

4. The waveguide antenna device of Claim 3,
wherein the first layer is disposed between the first circuit board and the second layer, and
the first layer includes a connecting pipe extending from the first circuit board to the first separating pipe.

5. The waveguide antenna device of Claim 1, further comprising:
a cover part including a first cover configured to cover at least a part of the first waveguide in the first direction and a second cover configured to cover at least a part of the first waveguide in the second direction.

6. The waveguide antenna device of Claim 5,
wherein the first cover includes a plurality of first transmit slots configured to transmit the first transmission signal and a plurality of receive slots configured to receive a first reception signal, and
the second cover includes a plurality of second transmit slots configured to transmit the first transmission signal.

7. The waveguide antenna device of Claim 1,
wherein the first circuit board further includes a second integrated circuit configured to output a second transmission signal and receive a second reflection signal, and
the first waveguide includes a second separating pipe configured to guide the second transmission signal in the first direction and in the second direction and a second receiving pipe configured to guide the second reflection signal received in the second direction to the second integrated circuit.

8. The waveguide antenna device of Claim 1, further comprising:
a second circuit board including a second integrated circuit configured to output a second transmission signal and receive a second reflection signal; and
a second waveguide including a second separating pipe configured to guide the second transmission signal in the first direction and in the second direction and a second receiving pipe configured to guide the second reflection signal received in the second direction to the second integrated circuit.

9. The waveguide antenna device of Claim 8,
wherein the second waveguide is disposed in a direction intersecting the first direction and the second direction with respect to the first waveguide.

10. The waveguide antenna device of Claim 1,
wherein the waveguide antenna device is installed in a mobility device,
the first direction corresponds to a direction of travel of the mobility device, and
the second direction corresponds to an opposite direction to the direction of travel of the mobility device.

11. The waveguide antenna device of Claim 7, further comprising:
a processor connected to the first integrated circuit and the second integrated circuit,
wherein the processor is configured to:
control the first integrated circuit to transmit the first transmission signal in the first direction and in the second direction,
control the second integrated circuit to transmit the second transmission signal in the first direction and in the second direction, and
receive the first reflection signal through the first integrated circuit and the second reflection signal through the second integrated circuit.

12. The waveguide antenna device of Claim 8, further comprising:
a processor connected to the first integrated circuit and the second integrated circuit,
wherein the processor is configured to:
control the first integrated circuit to transmit the first transmission signal in the first direction and in the second direction,
control the second integrated circuit to transmit the second transmission signal in the first direction and in the second direction, and
receive the first reflection signal through the first integrated circuit and the second reflection signal through the second integrated circuit.

13. The waveguide antenna device of Claim 11,
wherein the first reflection signal corresponds to the first transmission signal and the second transmission signal transmitted in the first direction,
the second reflection signal corresponds to the first transmission signal and the second transmission signal transmitted in the second direction, and
the processor is configured to detect an object located in the first direction or in the second direction based on the first reflection signal and the second reflection signal.

14. The waveguide antenna device of Claim 12,
wherein the first reflection signal corresponds to the first transmission signal and the second transmission signal transmitted in the first direction,
the second reflection signal corresponds to the first transmission signal and the second transmission signal transmitted in the second direction, and
the processor is configured to detect an object located in the first direction or in the second direction based on the first reflection signal and the second reflection signal.
